# EUROPÄISCHE PATENTANMELDUNG

(11) **EP 1 392 014 A2**
(43) Veröffentlichungstag der Anmeldung: **25.02.2004**
(21) Anmeldenummer: 03013028.0
(22) Anmeldetag: 10.06.2003
(51) Int. Cl.: H04B 15/00

(54) **Schaltungsanordnung und Verfahren zum Empfangen und Verarbeiten von Signalen**

(30) Priorität: 21.08.2002 DE 10238201
(71) Anmelder: ROBERT BOSCH GMBH, 70442 Stuttgart (DE)
(72) Erfinder: Moeller, Hans-Bernd, 31177 Harsum (DE); Eimertenbrink, Ralf, 31141 Hildesheim (DE); Kraul, Heiko, 31079 Sibbesse (DE)

(57) **Zusammenfassung**

Um eine Schaltungsanordnung (100) sowie ein Verfahren zum Empfangen und Verarbeiten von Signalen, insbesondere von Rundfunksignalen, wobei
- die Signale
   -- mittels mindestens einer Empfangseinheit (10) auf mindestens einer Empfangsfrequenz empfangen und
   -- mittels mindestens einer Verarbeitungseinheit (30) verarbeitet werden,
- die Verarbeitungseinheit (30)
   -- mindestens eine der Empfangseinheit (10) nachgeschaltete Prozessoreinheit (32) sowie
   -- mindestens ein der Prozessoreinheit (32) nachgeschaltetes Schaltnetzteil (34a, 34b) aufweist, das mit mindestens einer Grundfrequenz betrieben wird,
so weiterzuentwickeln, daß durch das vom Schaltnetzteil (34a, 34b) bewirkte Spektrum der Oberwellen keine Empfangsstörungen mehr hervorgerufen werden, wird vorgeschlagen, daß die Grundfrequenz in Abhängigkeit von der Empfangsfrequenz derart variiert wird, daß die Grundfrequenz sowie die jeweilige Frequenz der Oberwellen des Schaltnetzteils (34a, 34b) von der Empfangsfrequenz abweicht.

## Beschreibung

### Technisches Gebiet

Die vorliegende Erfindung betrifft eine Schaltungsanordnung zum Empfangen und Verarbeiten von Signalen, insbesondere von Rundfunksignalen, aufweisend
- mindestens eine Empfangseinheit, mittels derer die Signale auf mindestens einer Empfangsfrequenz empfangbar sind, sowie
- mindestens eine zum Verarbeiten der Signale vorgesehene Verarbeitungseinheit mit
   -- mit mindestens einer der Empfangseinheit nachgeschalteten Prozessoreinheit und
   -- mit mindestens einem der Prozessoreinheit nachgeschalteten, mit mindestens einer Grundfrequenz betriebenen Schaltnetzteil.

Des weiteren betrifft die vorliegende Erfindung ein einer derartigen Schaltungsanordnung zugeordnetes Verfahren zum Empfangen und Verarbeiten von Signalen, insbesondere von Rundfunksignalen.

### Stand der Technik

Bei Schaltnetzteilen entsteht aufgrund der Schaltflanken ein Spektrum energiehaltiger Oberwellen. Die Grundfrequenz gängiger Konzepte liegt in der Größenordnung etwa zwischen einhundert Kilohertz und fünfhundert Kilohertz. Die Flankensteilheit der Schaltimpulse sollte möglichst groß sein, damit der Wirkungsgrad des Schaltnetzteils entsprechend hoch ist. Allerdings ist in diesem Zusammenhang zu bedenken, daß umso mehr energiereiche Oberwellen entstehen, je größer die Flankensteilheit der Schaltimpulse ist.

Beim Einsatz von Schaltnetzteilen in Empfangseinrichtungen kann die Grundfrequenz des Schaltnetzteils oder eine Oberwelle im Empfangsbereich der Empfangseinheit liegen. Wird beispielsweise ein Schaltnetzteil mit 250 Kilohertz betrieben, so liegt die dritte Oberwelle im A[mplituden]M[odulation]-Radioband (531 Kilohertz bis 1.602 Kilohertz) bei 750 Kilohertz. Diese Oberwelle kann den Empfang eines Nutzsenders auf einer Oberwelle erheblich verschlechtern, weil ein Teil der Energie der Oberwelle auf den Antenneneingang zurückwirkt und damit den Nutzsender stört.

Um nun derartige Empfangsstörungen auf einer Oberwelle zu minimieren, sind die Oberwellen konventionellerweise soweit zu dämpfen, daß keine Rückwirkung auf den Antenneneingang mehr stattfinden kann. Dazu kann der Schaltungsteil umständlicherweise mit einem Blechgehäuse geschirmt werden, und die Schnittstellen können mit Dämpfungsmaßnahmen für den Empfangsteil unkritisch gemacht werden.

Eine Verrundung der Schaltimpulse, das heißt eine Reduzierung der Flankensteilheit der Schaltimpulse zum Minimieren des Spektrums der Oberwellen ist nur eingeschränkt möglich, denn der Wirkungsgrad des Schaltnetzteils wird hierdurch geringer und die Verlustleistung im Schaltelement steigt entsprechend an.

### Darstellung der Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, eine Schaltungsanordnung sowie ein Verfahren der eingangs genannten Art so weiterzuentwickeln, daß durch das vom Schaltnetzteil bewirkte Spektrum der Oberwellen keine Empfangsstörungen mehr hervorgerufen werden.

Diese Aufgabe wird durch eine Schaltungsanordnung mit den im Anspruch 1 angegebenen Merkmalen sowie durch ein Verfahren mit den im Anspruch 5 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Mithin ist der Kern der vorliegenden Erfindung in der Möglichkeit einer Synchronisation von Schaltnetzteilen zur Vermeidung von Eigenstörungen zu sehen. Hierzu ist die Grundfrequenz in Abhängigkeit von der Empfangsfrequenz, beispielsweise in Abhängigkeit von der A[mplituden]M[odulierten] Empfangsfrequenz, derart variierbar, daß die Grundfrequenz sowie die jeweilige Frequenz der Oberwellen des Schaltnetzteils von der Empfangsfrequenz abweicht.

Gemäß einer besonders erfinderischen Weiterbildung der vorliegenden Schaltungsanordnung und/oder des vorliegenden Verfahrens wird die Frequenz des mindestens einen Schaltnetzteils - zum Beispiel auf der Grundlage mindestens einer Tabelle der Frequenzen der Schaltnetzteile in Abhängigkeit von der Empfangsfrequenz - stets so gewählt, daß diese Grundfrequenz des jeweiligen Schaltnetzteils einige Frequenzschritte oder Frequenzsteps vor Erreichen einer Oberwelle der Schaltnetzteile variiert wird.

In zweckmäßiger Weise beruhen die vorliegende Schaltungseinrichtung sowie das vorliegende Verfahren darauf, daß der eigentlichen Empfangseinheit mindestens eine Prozessoreinheit zum Ansteuern der Tuner nachgeschaltet ist; diese Prozessoreinheit "kennt" also auch die Empfangsfrequenz.

Viele integrierte Schaltkreise (= sogenannte I[ntegrated]C[ircuit]s) für den Aufbau des mindestens einen Schaltnetzteils haben in vorteilhafter Weise einen Eingang für eine (externe) Synchronisation der Schaltfrequenz. Gemäß einer bevorzugten Weiterbildung kann nun dort, das heißt über mindestens einen derartigen Eingangsanschluß eine Frequenz eingespeist werden, so daß das Schaltnetzteil diese eingespeiste Frequenz übernimmt.

Hierbei wird diese Frequenz zweckmäßigerweise vom Geräteprozessor erzeugt, wobei der Geräteprozessor die Frequenz jeweils so variieren kann, daß die Frequenz der Oberwelle des Schaltnetzteils sicher nicht auf die Empfangsfrequenz fällt. Damit kann die Störung des Empfangs durch das Schaltnetzteil in zuverlässiger Weise vermieden werden.

Der Fachmann auf dem vorliegenden technischen Gebiet wird insbesondere zu schätzen wissen, daß durch die vorliegende Schaltungsanordnung und/oder durch das vorliegende Verfahren eine aufwendige E[lektro]M[agnetische]V[erträglichkeit]-Bearbeitung der Schaltnetzteile zum Minimieren der internen Systemstörungen entfallen kann. Unabhängig hiervon sind auch keinerlei Schirmmaßnahmen mit Blechgehäusen oder dergleichen erforderlich.

Die vorliegende Erfindung betrifft schließlich die Verwendung mindestens einer Schaltungsanordnung gemäß der vorstehend dargelegten Art und/oder eines Verfahrens gemäß der vorstehend dargelegten Art in mindestens einem insbesondere fortbewegungsmittelgebundenen Rundfunkempfangsgerät, insbesondere in mindestens einem Autoradio, oder in mindestens einer Navigationseinrichtung.

### Kurze Beschreibung der Zeichnungen

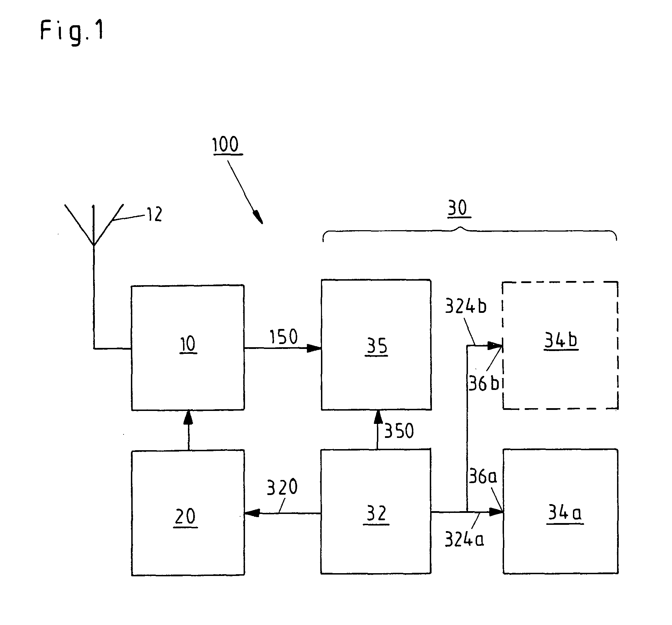

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die den Ansprüchen 1 und 5 nachgeordneten Ansprüche verwiesen, andererseits werden weitere Ausgestaltungen, Merkmale und Vorteile der vorliegenden Erfindung nachstehend anhand des durch Figur 1 veranschaulichten Ausführungsbeispiels näher erläutert.

Es zeigt:
- Fig. 1: in schematischer Prinzipdarstellung ein Ausführungsbeispiel einer Schaltungsanordnung gemäß der vorliegenden Erfindung.

### Bester Weg zur Ausführung der Erfindung

Das anhand Figur 1 veranschaulichte Ausführungsbeispiel einer in einem Autoradio integrierten Schaltungsanordnung 100 gemäß der vorliegenden Erfindung dient zum verfahrensmäßigen Empfangen und Verarbeiten von Rundfunksignalen und weist hierzu einen Empfänger 10 auf, der mit einer Antenne 12 ausgestattet ist. Mittels dieser Empfangseinheit 10 können Rundfunksignale auf bestimmten Empfangsfrequenzen, beispielsweise auf bestimmten A[mplituden]M[odulation]-Empfangsfrequenzen, empfangen werden.

Diese empfangenen Rundfunksignale werden mittels einer Verarbeitungseinheit 30 verarbeitet. Hierzu weist die Verarbeitungseinheit 30 einen der Empfangseinheit 10 nachgeschalteten Prozessor 32 sowie eine Auswerteeinheit 35 auf, wobei die Prozessoreinheit 32 mit der Auswerteeinheit 35 über eine Bussteuerung 350 in Verbindung steht, die von der Prozessoreinheit 32 zur Auswerteeinheit 35 verläuft.

Die Auswerteeinheit 35 dient in erster Linie zum Auswerten der von der Empfangseinheit 10 empfangenen Rundfunksignale 150; dies bedeutet, daß die Auswerteeinheit 35 von der Empfangseinheit 10 mit den empfangenen Rundfunksignalen 150 beaufschlagt wird.

Ferner ist anhand Figur 1 veranschaulicht, daß der Verarbeitungseinheit 30 zwei dem Prozessor 32 nachgeschaltete, parallel zueinander angeordnete Schaltnetzteile 34a, 34b zugeordnet sind, die mit einer jeweiligen Grundfrequenz betrieben werden.

Bei diesen Schaltnetzteilen 34a, 34b entsteht aufgrund der Schaltflanken ein Spektrum energiehaltiger Oberwellen. Die Grundfrequenz liegt in der Größenordnung zwischen etwa einhundert Kilohertz und etwa fünfhundert Kilohertz. Die Flankensteilheit der Schaltimpulse ist bei der vorliegenden Erfindung möglichst groß, damit der jeweilige Wirkungsgrad der Schaltnetzteile 34a, 34b entsprechend hoch ist.

Allerdings ist in diesem Zusammenhang zu bedenken, daß umso mehr energiereiche Oberwellen entstehen, je größer die Flankensteilheit der Schaltimpulse ist. Beim Einsatz der Schaltnetzteile 34a, 34b in der Schaltungsanordnung 100 liegt die Grundfrequenz der Schaltnetzteile 34a, 34b und/oder die Oberwellen im Empfangsbereich der Empfangseinheit 10.

Um in diesem Zusammenhang nun zu vermeiden, daß diese Oberwellen den Empfang des Nutzsenders auf einer Oberwelle erheblich verschlechtern, weil ein Teil (der Energie) der Oberwellen auf die Empfangseinheit 10 zurückwirkt und damit den Nutzsender stört, besteht der Kern der vorliegenden Erfindung in der Möglichkeit, die Frequenz der Schaltnetzteile 34a, 34b in Abhängigkeit von der Empfangsfrequenz variabel zu ändern, so daß keine Oberwelle eines Schaltnetzteils 34a, 34b auf die Empfangsfrequenz fällt.

Indem also die Grundfrequenz in Abhängigkeit von der Empfangsfrequenz erfindungsgemäß so gewählt wird, daß der Betrag der Grundfrequenz sowie der jeweiligen Frequenz der Oberwellen des Schaltnetzteils 34a, 34b vom Betrag der Empfangsfrequenz abweicht, werden durch das vom jeweiligen Schaltnetzteil 34a, 34b bewirkte Spektrum der Oberwellen keine Empfangsstörungen hervorgerufen.

Hierzu wird die von der Prozessoreinheit 32 erzeugte und/oder mittels der Prozessoreinheit 32 in Abhängigkeit von der Empfangsfrequenz gesteuerte Grundfrequenz über jeweils einen für externe Synchronisationssignale 324a bzw. 324b vorgesehenen Eingangsanschluß 36a bzw. 36b in das Schaltnetzteil 34a bzw. 34b, und hierbei in jeweils einen dem Schaltnetzteil 34a bzw. 34b zugeordneten integrierten Schaltkreis, eingespeist; das jeweilige Schaltnetzteil 34a bzw. 34b übernimmt dann diese eingespeiste Grundfrequenz als Schaltfrequenz.

Aus der Darstellung der Figur 1 geht des weiteren hervor, daß zwischen die Empfangseinheit 10 und die Prozessoreinheit 32 eine PLL-Einheit 20 (P[hase]L[ocked]L[oop] = phasenstarre bzw. phasenverriegelte Schleife) geschaltet ist; dementsprechend ist in Figur 1 die Bussteuerung 320 von der Prozessoreinheit 32 zur P[hase]L[ocked]L[oop]-Einheit 20 eingezeichnet.

Ferner ist der Darstellung der Figur 1 entnehmbar, daß sich das Verfahren gemäß der vorliegenden Erfindung auch bei mehreren Schaltnetzteilen (im veranschaulichten Ausführungsbeispiel: bei zwei Schaltnetzteilen 34a und 34b) im Gerät anwenden läßt.

Gemäß einer erfindungswesentlichen Weiterbildung muß die Generierung der Schaltnetzteilfrequenz nicht vom Geräteprozessor erfolgen; sie hat jedoch prozessorgesteuert der Empfangsfrequenz "angepaßt" zu sein.

Schließlich ist hinsichtlich der Nachweisbarkeit bei der vorliegenden Erfindung anzumerken, daß ohne Synchronisation die Störungen durch die Schaltnetzteile 34a, 34b deutlich hörbar sind. Bei Einsatz des vorstehend dargelegten Konzepts gemäß des vorliegenden Verfahrens hingegen sind die Störungen durch die Schaltnetzteile 34a, 34b in der vorliegenden Schaltungsanordnung 100 eliminiert.

## Patentansprüche

1. Schaltungsanordnung (100) zum Empfangen und Verarbeiten von Signalen, insbesondere von Rundfunksignalen, aufweisend
- mindestens eine Empfangseinheit (10), mittels derer die Signale auf mindestens einer Empfangsfrequenz empfangbar sind, sowie
- mindestens eine zum Verarbeiten der Signale vorgesehene Verarbeitungseinheit (30) mit
-- mit mindestens einer der Empfangseinheit (10) nachgeschalteten Prozessoreinheit (32) und
-- mit mindestens einem der Prozessoreinheit (32) nachgeschalteten, mit mindestens einer Grundfrequenz betriebenen Schaltnetzteil (34a, 34b),
**dadurch gekennzeichnet,**
**daß** die Grundfrequenz in Abhängigkeit von der Empfangsfrequenz derart variierbar ist, daß der Betrag der Grundfrequenz sowie der jeweiligen Frequenz der Oberwellen des Schaltnetzteils (34a, 34b) vom Betrag der Empfangsfrequenz abweicht.

2. Schaltungsanordnung gemäß Anspruch 1, **dadurch gekennzeichnet, daß** die Grundfrequenz mittels der Prozessoreinheit (32) in Abhängigkeit von der Empfangsfrequenz steuerbar ist.

3. Schaltungsanordnung gemäß Anspruch 1 oder 2, **dadurch gekennzeichnet,**
- **daß** das Schaltnetzteil (34a, 34b), insbesondere mindestens ein dem Schaltnetzteil (34a, 34b) zugeordneter integrierter Schaltkreis, mindestens einen insbesondere für externe Synchronisationssignale vorgesehenen Eingangsanschluß (36a, 36b) aufweist, über den die von der Prozessoreinheit (32) erzeugte Grundfrequenz einspeisbar ist, und
- **daß** das Schaltnetzteil (34a, 34b) diese eingespeiste Grundfrequenz als Schaltfrequenz übernimmt.

4. Schaltungsanordnung gemäß mindestens einem der Ansprüche 1 bis 3, **dadurch gekennzeichnet,**
- **daß** der Empfangseinheit (10) mindestens eine Antenneneinheit (12) zugeordnet ist und/oder
- **daß** zwischen die Empfangseinheit (10) und die Prozessoreinheit (32) mindestens eine PLL-Einheit (20; P[hase]L[ocked]L[oop] = phasenstarre bzw. phasenverriegelte Schleife) geschaltet ist und/oder
- **daß** der Prozessoreinheit (32) zwei oder mehr zueinander parallel geschaltete Schaltnetzteile (34a, 34b) nachgeschaltet sind und/oder
- **daß** der Verarbeitungseinheit (30) mindestens eine Auswerteeinheit (35) zum Auswerten der empfangenen Signale (150), insbesondere der empfangenen Rundfunksignale, zugeordnet ist.

5. Verfahren zum Empfangen und Verarbeiten von Signalen, insbesondere von Rundfunksignalen, wobei
- die Signale
-- mittels mindestens einer Empfangseinheit (10) auf mindestens einer Empfangsfrequenz empfangen und
-- mittels mindestens einer Verarbeitungseinheit (30) verarbeitet werden,
- die Verarbeitungseinheit (30)
-- mindestens eine der Empfangseinheit (10) nachgeschaltete Prozessoreinheit (32) sowie
-- mindestens ein der Prozessoreinheit (32) nachgeschaltetes Schaltnetzteil (34a, 34b) aufweist, das mit mindestens einer Grundfrequenz betrieben wird,
**dadurch gekennzeichnet,**
**daß** die Grundfrequenz in Abhängigkeit von der Empfangsfrequenz derart variiert wird, daß die Grundfrequenz sowie die jeweilige Frequenz der Oberwellen des Schaltnetzteils (34a, 34b) von der Empfangsfrequenz abweicht.

6. Verfahren gemäß Anspruch 5, **dadurch gekennzeichnet, daß** die Grundfrequenz so gewählt wird, daß einige Frequenzschritte vor Erreichen einer Oberwelle des Schaltnetzteils (34a, 34b) die Grundfrequenz geändert wird.

7. Verfahren gemäß Anspruch 5 oder 6, **dadurch gekennzeichnet,**
- **daß** die Grundfrequenz mittels der Prozessoreinheit (32) in Abhängigkeit von der Empfangsfrequenz gesteuert wird und/oder
- **daß** die Grundfrequenz von der Prozessoreinheit (32) erzeugt wird.

8. Verfahren gemäß mindestens einem der Ansprüche 5 bis 7, **dadurch gekennzeichnet, daß** die Grundfrequenz über mindestens einen insbesondere für externe Synchronisationssignale vorgesehenen Eingangsanschluß (36a, 36b) in das Schaltnetzteil (34a, 34b), insbesondere in mindestens einen dem Schaltnetzteil (34a, 34b) zugeordneten integrierten Schaltkreis, eingespeist wird.

9. Verfahren gemäß mindestens einem der Ansprüche 5 bis 8, **dadurch gekennzeichnet, daß** die eingespeiste Grundfrequenz vom Schaltnetzteil (34a, 34b) als Schaltfrequenz übernommen wird.

10. Verwendung mindestens einer Schaltungsanordnung (100) gemäß mindestens einem der Ansprüche 1 bis 4 und/oder eines Verfahrens gemäß mindestens einem der Ansprüche 5 bis 9 in mindestens einem insbesondere fortbewegungsmittelgebundenen Rundfunkempfangsgerät, insbesondere in mindestens einem Autoradio, oder in mindestens einer Navigationseinrichtung.
